# EUROPÄISCHE PATENTSCHRIFT

(11) **EP 2 851 632 B1**
(45) Veröffentlichungstag und Bekanntmachung des Hinweises auf die Patenterteilung: **17.08.2022**
(21) Anmeldenummer: 14001708.8
(22) Anmeldetag: 15.05.2014
(51) Int. Cl.: F25B 9/00, F25B 40/00, F25B 41/00

(54) **Wärmepumpe, insbesondere zur Heizung eines Fahrzeuginnenraums, sowie Verfahren zum Betreiben einer Wärmepumpe**
Heat pump, in particular for heating the inside of a vehicle, and method for operating a heat pump
Pompe à chaleur, en particulier destinée au chauffage d'un espace intérieur de véhicule, et procédé de fonctionnement d'une pompe à chaleur

(30) Priorität: 02.08.2013 DE 102013012926
(43) Veröffentlichungstag der Anmeldung: 25.03.2015
(73) Patentinhaber: MAN Truck & Bus SE, 80995 München (DE)
(72) Erfinder: Schydlo, Alexander, 81243 München (DE)
(74) Vertreter: v. Bezold & Partner Patentanwälte - PartG mbB

(56) Entgegenhaltungen:
- WO-A2-2012/012496
- US-A1- 2012 000 236
- US-A1- 2012 234 026
- US-A1- 2013 098 096
- ELBEL S ET AL: "DEVELOPMENT OF A PROTOTYPE REFRIGERANT EJECTOR USED AS EXPANSION DEVICE IN A TRANSCRITICAL CO2 SYSTEM", VDA ALTERNATE REFRIGERANT WINTER MEETING, XX, XX, 15. Februar 2006 (2006-02-15), Seiten 1-17, XP001500908,

## Beschreibung

Die Erfindung betrifft ein Verfahren zum Betreiben einer Wärmepumpe.

Für die Kälte- und Wärmeerzeugung ist ein Kompression-Kaltdampf-Kreisprozess (KKKP) allgemein bekannt, wobei als Arbeitsmedium (Kältemittel) Kohlenwasserstoffe nach DIN 8962 verwendet werden. Für die Heizung von Fahrzeuginnenräumen, beispielsweise von Fahrgasträumen von Bussen oder Fahrerhauskabinen sind bereits Wärmepumpen verwendet, bei denen ein linksläufiger Kompression-Kaltdampf-Kreisprozess (KKKP) realisiert ist, wobei als Kältemittel häufig R 134a eingesetzt ist.

Bei einem solchen Wärmepumpen-Kreisprozess sind nacheinander ein Verdichter (Kompressor), ein Kondensator, ein Drosselventil und ein Verdampfer angeordnet. Das Arbeitsmedium (Kältemittel) als überhitztes Fluid wird im Kompressor verdichtet und dem Kondensator zugeführt, welcher latente und fühlbare Wärme direkt in einen Fahrzeuginnenraum abgibt oder indirekt auf einen sekundären Kreislauf als Nutzwärme überträgt. Nach einer Phasenumwandung gasförmig/flüssig im Kondensator wird das Arbeitsmittel im nachfolgenden Drosselventil in einer isenthalpen Drosselung gedrosselt und erreicht am Ende des Drosselprozesses die Nassdampfparameter. Im nachfolgenden Verdampfer findet die Phasenumwandung flüssig/gasförmig statt, wozu aus der Umgebung Wärme zum Verdampfer zugeführt wird.

Der thermische Wirkungsgrad dieses bekannten Wärmepumpen-Kreisprozesses ist von der Verdichterleistung abhängig und erfordert eine relativ hohe Antriebsenergie.

Aus der Veröffentlichung von Elbel S et al. "DEVELOPMENT OF A PROTOTYPE REFRIGERANT EJECTOR USED AS EXPANSION DEVICE IN A TRANSCRITICAL CO2 SYSTEM", VDA ALTERNATE REFRIGERANT WINTER MEETING, 15. Februar 2006, Seiten 1-17, ist es bekannt, einen Kühlkreislauf einer Klimaanlage eines Kraftfahrzeugs mit einem Ejektor auszustatten. Aus der US 2012/000236 A1 ist ein Wärmepumpenkreislauf mit Gaskühler und einphasigem Ejektor bekannt, welcher zum Beheizen eines Verbrauchers, beispielsweise einer Fußbodenheizung, verwendet wird.

Aufgabe der Erfindung ist es, ein Verfahren zum Betrieb einer Wärmepumpe so weiterzubilden, dass der Verbrauch der Antriebsenergie des Verdichters vergleichsweise geringer und damit der thermische Wirkungsgrad erhöht wird.

Diese Aufgabe wird gelöst mit den Merkmalen des unabhängigen Anspruchs. Vorteilhafte Ausgestaltungen sind Gegenstand der darauf rückbezogenen Unteransprüche.

Bei der erfindungsgemäßen Wärmepumpe wird im Wärmepumpenkreislauf im Verdichter gasförmiges Arbeitsmedium komprimiert und das komprimierte Arbeitsmedium einem Kondensator zugeführt, in dem dieses unter Wärmeabgabe kondensiert. Dort entstehende Wärme wird als Nutzwärme direkt oder indirekt einem Fahrzeuginnenraum zugeführt.

Der Wärmepumpenkreislauf entsprechend dem erfindungsgemäßen Verfahren zum Betrieb einer Wärmepumpe ist gegenüber dem bekannten Wärmepumpenkreislauf mit weiteren Funktionselementen ergänzt und modifiziert. So ist dem Kondensator eine Strahlpumpe nachgeordnet, dem einerseits das vom Kondensator mit hohem Druck kommende, weitgehende flüssige Arbeitsmedium als Treibmedium durch eine Treibdüse zugeführt wird. Die Begrifflichkeit Strahlpumpe steht hier beispielhaft für jedwede Vorrichtung, in der die Pumpwirkung durch einen Fluidstrahl ("Treibmedium") erzeugt wird, der durch Impulsaustausch ein anderes Medium ("Saugmedium") ansaugt, beschleunigt und verdichtet/fördert, sofern es unter ausreichendem Druck steht.

Andererseits wird das von einem Verdampfer mit geringerem Druck abströmende, weitgehend gasförmige Arbeitsmedium als Saugmedium zugeführt. Dabei wird in der Strahlpumpe, bevorzugt im Diffusor der Strahlpumpe das Gesamtmedium aus Treibmedium und Saugmedium zu einem Zweiphasengemisch verdichtet.

Dem Strahlpumpenausgang ist ein Separator nachgeordnet, im dem das gasförmige Arbeitsmedium vom flüssigen Arbeitsmedium getrennt wird.

Der Gasausgang des Separators ist mit dem Verdichtereingang und der Flüssigkeitsausgang des Separators ist mit dem Eingang eines Drosselventils verbunden. Im Drosselventil wird das weitgehend flüssige Arbeitsmedium gedrosselt und dem Verdampfer zugeführt, wo unter Wärmezufuhr die Phasenumwandlung zu gasförmigem Arbeitsmedium erfolgt, das als Saugmedium dem Saugmediumeingang der Strahlpumpe zugeführt wird.

Die erfindungsgemäße Anwendung der Strahlpumpe im Kreisprozess reduziert vergleichsweise die Verdichtungsarbeit des Verdichters und führt damit vorteilhaft zu einer Erhöhung des thermischen Wirkungsgrads. Ein geringerer Antriebsenergieverbrauch der Wärmepumpe führt somit zu einer Erhöhung des gesamten thermodynamischen Wirkungsgrads im Triebstrang eines Fahrzeugs, insbesondere eines Busses und führt damit zu einer energiesparenden Reduzierung des Kraftstoffverbrauchs und einer umweltfreundlichen Reduzierung des CO₂-Ausstoßes.

Eine vorteilhafte Weiterbildung des erfindungsgemäßen Verfahrens zum Betrieb einer Wärmepumpe weist einen Zwischenwärmeübertrager auf, durch den einerseits das Arbeitsmedium aus dem Kondensator zur Strahlpumpe und andererseits das Arbeitsmedium aus dem Separator zum Verdichter geleitet ist. Eine damit verbundene Wärmeregeneration führt vorteilhaft zu einer Reduzierung der Exergieverluste im Kreislauf.

Für den Wärmepumpenkreislauf sind Druckniveaus vorzugeben dergestalt, dass das höchste Druckniveau durch den Ausgangsdruck des Verdichters und das niedrigste Druckniveau durch die Sättigungstemperatur im Verdampfer bestimmt ist. Zwei dazwischenliegende Zusatzdruckniveaus ergeben sich durch die Betriebsdrücke nach der Strahlpumpe und nach dem Drosselventil.

Der Wärmepumpenkreislauf entsprechend dem erfindungsgemäßen Verfahren zum Betrieb einer Wärmepumpe kann vorteilhaft mit einem Arbeitsmedium aus Kohlenstoffdioxid-CO₂ (Bezeichnung R 744) betrieben werden. Dieses natürliche Arbeitsmedium ist umweltfreundlich und kostengünstig und die positiven thermodynamischen Eigenschaften des Kohlenstoffdioxids ermöglichen eine effektive Anwendung in der Wärmepumpe. Zudem werden zunehmend ökologische Aspekte relevant (zum Beispiel Richtlinie 2006/40/EG des Europäischen Parlaments und Rates), die mit dem Arbeitsmedium Kohlenstoffdioxid-CO₂ erfüllbar sind.

Die mit der erfindungsgemäßen Verfahrensführung erzielbaren Vorteile entsprechen denen der Wärmepumpe.

Anhand einer Zeichnung wird die Erfindung weiter erläutert.

Es zeigen:
- Fig. 1: eine schematische Darstellung einer CO₂-Wärmepumpe mit einem Ejektor als Strahlpumpe und einem Verdichter,
- Fig. 2: ein Inp-h-Diagramm des linksläufigen CO₂-Wärmepumpenkreislaufs der Wärmepumpe nach Fig. 1,
- Fig. 3: ein T-s-Diagramm zur Darstellung des Gewinns der Verdichtungsarbeit,
- Fig. 4: ein Schema einer Wärmepumpe ohne Strahlpumpe (Stand der Technik), und
- Fig. 5: das Inp-h-Diagramm für den linksläufigen Wärmepumpenkreislauf ohne Strahlpumpe der Wärmepumpe nach Fig. 4.

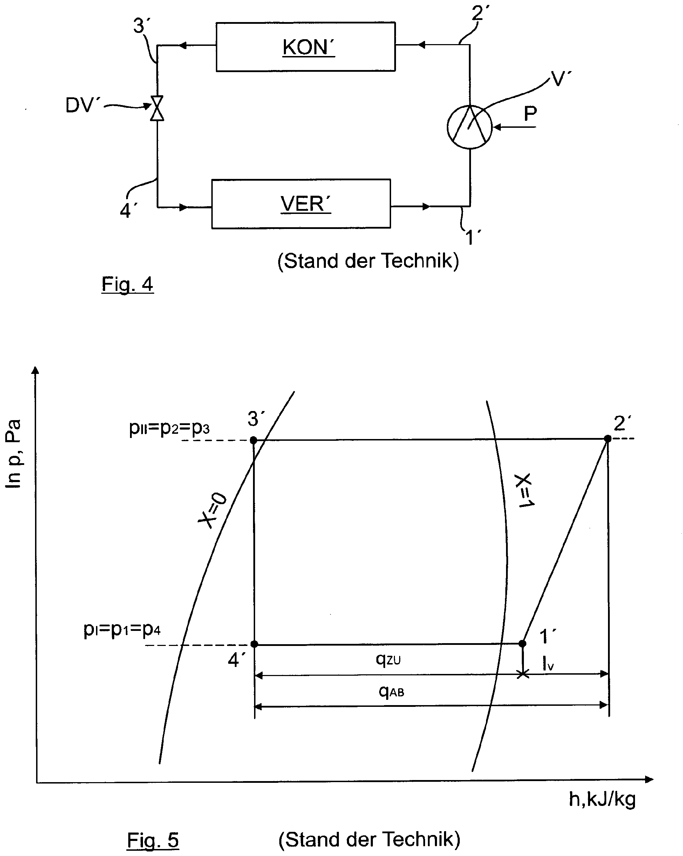

In Fig. 4 ist das Schema eines linkläufigen Kompression-Kaltdampf-Kreisprozesses (KKKP) einer Wärmepumpe ohne Strahlpumpe nach dem Stand der Technik dargestellt (die verwendeten Bezugszeichen sollen sowohl die Verbindungsleitungen als auch das jeweils darin enthaltene Arbeitsmedium mit seinen aktuellen Zuständen charakterisieren):
Das Arbeitsmedium (Kältemittel) wird in bekannter Weise als überhitztes Fluid im Verdichter V' verdichtet (polytrope Verdichtung 1' → 2') und zum Kondensator KON' zugeführt. Die latente und fühlbare Wärme des Fluids wird im Kondensator KON direkt einem Fahrzeuginnenraum, zum Beispiel einem Fahrgastraum oder einer Kabine oder indirekt einem sekundären Mediumkreislauf des Fahrzeugs als Nutzwärme übertragen (2' → 3'). Nach der Phasenumwandlung im Kondensator KON' wird das Arbeitsmedium in einem nachgeordneten Drosselventil DV' gedrosselt (isenthalpe Drosselung 3' → 4'). Am Ende des Drosselprozesses erreicht das Arbeitsmedium die Nassdampfparameter. Dann wird das Zweiphasengemisch einem Verdampfer VER' zugeführt. Im Verdampfer findet eine Phasenumwandlung statt, wobei ein der Umgebung zugeführter Wärmestrom mit einem hohen thermodynamischen Potential auf das Arbeitsmedium im Verdampfer übertragen (4' → 1') wird.

Dieser bekannte Kreislauf nach dem Stand der Technik ist im Inp-h-Diagramm der Fig. 5 abgebildet. Das Druckniveau p_{I} = p₁ = p₄ entspricht dem Druck an den Stellen 1' und 4' und das Druckniveau p_{II} = p₂ = p₃ entspricht dem Druckniveau an den Stellen 2' und 3'. Die Druckverluste in dem Wärmeübertragern sind vernachlässigbar. Aus dem Diagramm ist die abgeführte Wärme q_{ab} zu entnehmen, deren Wert der zugeführten Wärme q_{zu} ergänzt um die Verdichtungsarbeit Iᵥ entspricht. Der thermische Wirkungsgrad ist von der Verdichterleistung abhängig und mit zunehmenden Druckverhältnis p_{II}/p_{I} steigt der Bedarf der Antriebsenergie. Ziel der Erfindung ist eine Verbesserung des vorstehenden Wärmepumpenkreislauf mit einer Erhöhung des thermischen Wirkungsgrads durch eine Reduzierung des Verbrauchs der Antriebsenergie des Verdichters V. Zudem wird ein natürliches Arbeitsmedium (Kältemittel) als umweltfreundliches, billiges Kohlenstoffdioxid-CO₂ (R 744) verwendet.

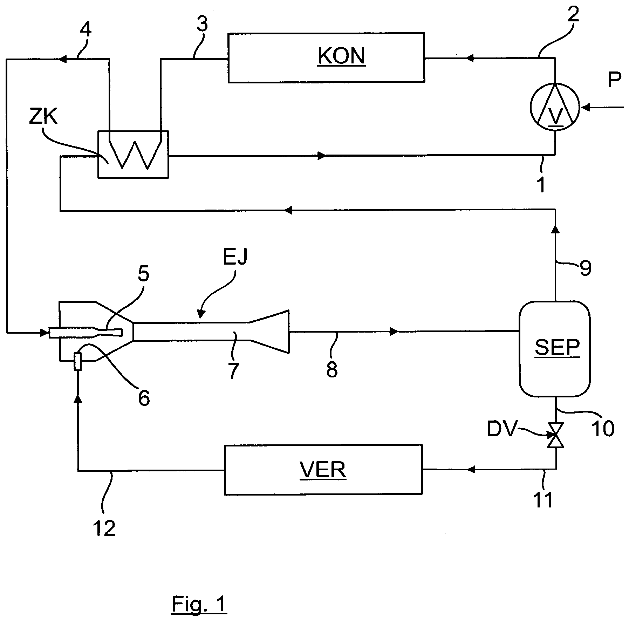

In Fig. 1 ist das Schema einer CO₂-Wärmepumpe entsprechend dem erfindungsgemäßen Verfahren zum Betrieb einer Wärmepumpe mit einem Ejektor EJ als Strahlpumpe und einem Verdichter V dargestellt. Dem Verdichter V ist ein Kondensator KON über eine Leitung 2 nachgeordnet. Der Ausgang des Kondensators KON ist über eine Leitung 3 mit einem Zwischenwärmeübertrager ZK verbunden, dessen Ausgang mit einer Leitung 4 mit einer Treibdüse 5 eines Ejektors EJ verbunden ist. Der Ausgang des Ejektors EJ am Diffusor 7 führt mit einer Leitung 8 zu einem Separator SEP, dessen Gasausgang über eine Leitung 9 zum Zwischenwärmeübertrager ZK und von dort mit einer Leitung 1 zum Eingang des Verdichters V geführt ist. Der Flüssigkeitsausgang des Separators SEP ist mit einer Leitung 10 über ein Drosselventil DV und eine Leitung 11 mit einem Verdichter VER verbunden, dessen Ausgang über eine Leitung 12 zu einem Saugmediumeingang 6 des Ejektors EJ geführt ist.

Die vorstehende Anordnung hat folgende Funktion:
Das gasförmige Arbeitsmedium CO₂ wird im Verdichter V komprimiert (1 → 2). Anschließend wird das Arbeitsmedium CO₂ dem Kondensator KON zugeführt, wo eine Phasenumwandlung (2 → 3) stattfindet, in dem das gasförmige Fluid kondensiert und die dadurch entstehende Wärme als Nutzwärme zur Verfügung steht. Diese kann direkt in einen Fahrgastraum und/oder eine Kabine und/oder einen anderen Innenraum eines Fahrzeugs übertragen werden. Alternativ oder parallel kann die Nutzwärme auch einem Wärmekreislauf des Fahrzeugs zugeführt und indirekt genutzt werden.

Im Zwischenwärmeübertrager ZK erfolgt eine Wärmeregeneration (3 → 4, 9 → 1), die zur Reduzierung der Exergieverluste im Kreislauf führt. Dabei wird der Arbeitsmediummassenstrom am Austritt aus dem Kondensator KON im Zwischenwärmeübertrager ZK abgekühlt und im Gegenzug der Arbeitsmediummassenstrom vor dem Verdichter V überhitzt.

Aus dem Zwischenwärmeübertrager ZK wird der vom Kondensator kommende Arbeitsmediummassenstrom dem Ejektor EJ an einer Treibdüse 5 als Treibmedium zugeführt, wo der statische Druck des Arbeitsmedium-Fluids abnimmt. Die Abnahme des statischen Drucks im Ejektor EJ erhöht die Geschwindigkeit des Arbeitsmedium-Fluids in seinem Querschnitt und führt zu einer lokalen Erhöhung des dynamischen Drucks. Dadurch entsteht der Effekt einer Strahlpumpe, so dass durch das Treibmedium (Fluidstrom aus dem Kondensator KON bzw. aus Zwischenwärmeübertrager ZK) ein anderes Medium als Saugmedium angesaugt und gepumpt wird. Das Saugmedium ist hier das aus dem Verdampfer VER ausströmende Arbeitsmedium, welches über die Leitung 12 an einem Saugmediumeingang 6 des Ejektors EJ angeschlossen ist. Am Ende des Ejektors EJ in dessen Diffusor 7 wird das Gesamtmedium verdichtet. Der Ejektor EJ als Pumpe ist sehr einfach aufgebaut und enthält keine bewegten Teile, so dass er besonders robust und wartungsarm einsetzbar ist.

Das verdichtete Zweiphasengemisch aus dem Ejektor EJ wird dem Separator SEP über die Leitung 8 zugeführt. Im Separator SEP wird das gasförmige CO₂ vom flüssigen CO₂ getrennt. Das gasförmige CO₂ strömt aus dem Separator SEP über die Leitung 9 zum Zwischenwärmeübertrager ZK und von dort weiter über die Leitung 1 zum Verdichter V.

Flüssiges CO₂ sammelt sich im Separator und wird über die Leitung 10 durch das Drosselventil DV und die anschließende Leitung 11 dem Verdampfer VER zugeführt. Im Verdampfer wird die Phasenumwandlung flüssig-gasförmig realisiert, wobei dem flüssigen CO₂ ein Wärmestrom zugeführt wird. Das dann gasförmige CO₂ strömt vom Verdampfer VER über die Leitung 12 als Saugmedium zum Ejektor EJ.

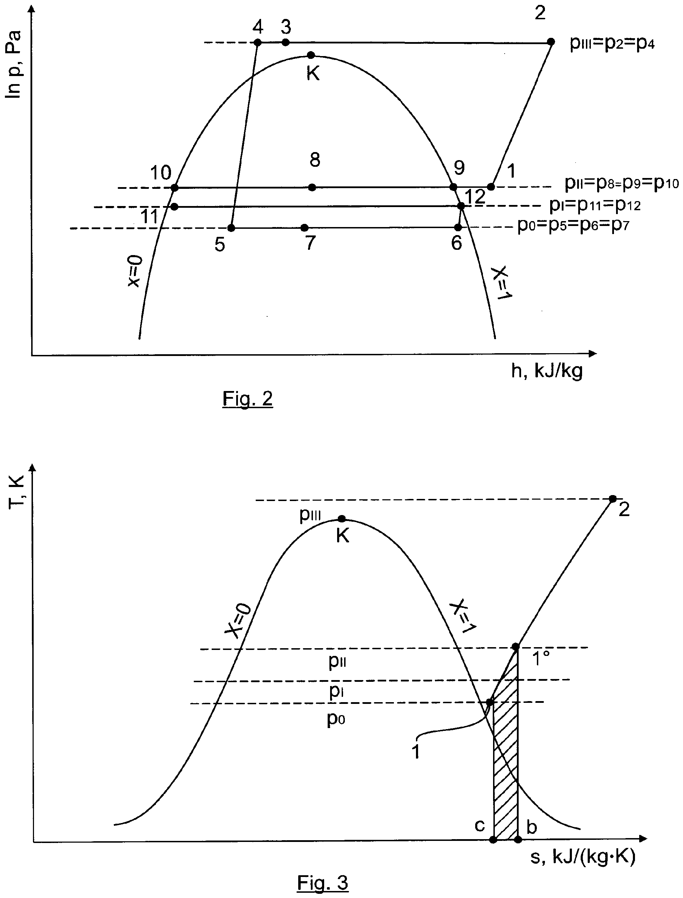

In Fig. 2 ist der Kreisprozess detailliert in einem Inp-h-Diagramm dargestellt:
Für die Realisierung des CO₂-Kreisprozesses werden vier Druckniveaus definiert. Das höchste Druckniveau p_{III} bestimmt der Ausgangdruck des Verdichters V, welcher in der Auslegungsphase der Wärmepumpe von der Sättigungstemperatur des Fluids im Kondensator KON abhängig wird dergestalt dass die Sättigungstemperatur im Kondensator KON höher als der Temperatur der Wärmesenke sein muss. Der geringste Druck p₀ im System liegt an der Sättigungstemperatur im Verdampfer VER entsprechend der Temperatur der Wärmequelle. Die zwei dazwischenliegenden Zusatzdruckniveaus p_{I} und p_{II} ergeben sich als resultierende Betriebsdrücke nach dem Ejektor EJ (Kompression bei 8) und nach dem Drosselventil DV (bei 11). Diese Drücke sind von der Geometrie und konstruktiven Eigenschaften des Ejektors EJ abhängig.

In Fig. 3 sind die Verdichtungsarbeiten des Verdichters V für die beiden dargestellten Wärmepumpenkonzepte gekennzeichnet: der Übergang von 1 nach 2 ist für eine Wärmepumpe ohne Ejektor entsprechend dem Stand der Technik nach den Fig. 4 und 5. Der Übergang von 1⁰ nach 2 ergibt sich für eine erfindungsgemäße Wärmepumpe mit Ejektor EJ. Es zeigt sich, dass die Verdichtungsarbeit für das Wärmepumpenkonzept mit einem Ejektor EJ im Vergleich zu einer Wärmepumpe ohne Ejektor EJ geringer wird. Der Gewinn der Verdichtungsarbeit ist im T-s-Diagramm der Fig. 3 als Fläche 1 → 1⁰ → b → c schraffiert gekennzeichnet.

### Bezugszeichenliste

- V: Verdichter
- KON: Kondensator
- DV: Drosselventil
- VER: Verdampfer
- ZK: Zwischenwärmeübertrager
- EJ: Ejektor
- SEP: Separator
- 1: Arbeitsmedium (Leitung) zwischen ZK und V
- 2: Arbeitsmedium (Leitung) zwischen V und KON
- 3: Arbeitsmedium (Leitung) zwischen KON und ZK
- 4: Arbeitsmedium (Leitung) zwischen ZK und EJ
- 5: Treibdüse
- 6: Saugmediumeingang
- 7: Diffusor
- 8: Arbeitsmedium (Leitung) zwischen EJ und SEP
- 9: Arbeitsmedium (Leitung) zwischen SEP und ZK
- 10: Arbeitsmedium (Leitung) zwischen SEP und DV
- 11: Arbeitsmedium (Leitung) zwischen DV und VER
- 12: Arbeitsmedium (Leitung) zwischen VER und EJ
- 1': Arbeitsmedium (Leitung) zwischen VER' und V'
- 2': Arbeitsmedium (Leitung) zwischen V' und KON'
- 3': Arbeitsmedium (Leitung) zwischen KON' und DV'
- 4': Arbeitsmedium (Leitung) zwischen DV' und VER'

## Patentansprüche

1. Verfahren zum Betreiben einer Wärmepumpe,
bei dem in einem Wärmepumpenkreislauf eines Arbeitsmediums ein Verdichter (V), ein Kondensator (KON), ein Drosselventil (DV), ein Verdampfer (VER), eine Strahlpumpe (EJ) und ein Separator (SEP) angeordnet sind,
wobei im Verdichter (V) des Wärmepumpenkreislaufs gasförmiges Arbeitsmedium komprimiert wird,
wobei der Verdichterausgang mit dem Eingang des Kondensators (KON) verbunden ist, in dem das Arbeitsmedium unter Wärmeabgabe kondensiert, wobei die Wärme als Nutzwärme direkt oder indirekt einem Fahrzeuginnenraum, zugeführt wird,
wobei dem Kondensator (KON) die Strahlpumpe (EJ) nachgeordnet ist, der einerseits das vom Kondensator (KON) kommende flüssige Arbeitsmedium als Treibmedium zugeführt wird und der andererseits das vom Verdampfer (VER) abströmende gasförmige Arbeitsmedium als Saugmedium zugeführt wird, dergestalt dass das Treibmedium und das Saugmedium in der Strahlpumpe (EJ) zu einem Zweiphasengemisch verdichtet werden, insbesondere das Treibmedium und das Saugmedium in einem Diffusor (7) der Strahlpumpe (EJ) zu einem Zweiphasengemisch verdichtet werden,
wobei der Strahlpumpenausgang mit dem Eingang des Separators (SEP) verbunden ist, dem das Zweiphasengemisch zugeführt wird und in dem das gasförmige Arbeitsmedium vom flüssigen Arbeitsmedium getrennt wird,
wobei der Gasausgang des Separators (SEP) mit dem Verdichtereingang und der Flüssigkeitsausgang des Separators (SEP) mit dem Eingang des Drosselventils (DV) verbunden ist, und
wobei im Drosselventil (DV) das flüssige Arbeitsmedium gedrosselt wird und der Ausgang des Drosselventils mit dem Eingang des Verdampfers (VER) verbunden ist, in dem unter Wärmezufuhr die Phasenumwandlung zu gasförmigem Arbeitsmedium erfolgt, das als Saugmedium dem Saugmediumeingang (6) der Strahlpumpe (EJ) zugeführt wird.

2. Verfahren nach Anspruch 1, wobei der Wärmepumpenkreislauf weiter einen Zwischenwärmeübertrager (ZK) aufweist, durch den, vorzugsweise im Gegenstrom, einerseits das Arbeitsmedium vom Kondensator (KON) zur Strahlpumpe (EJ) und andererseits das Arbeitsmedium vom Separator (SEP) zum Verdichter (V) geleitet ist.

3. Verfahren nach Anspruch 1 oder Anspruch 2, wobei für den Wärmepumpenkreislauf vier Druckniveaus vorgegeben sind, dergestalt,
dass das höchste Druckniveau (p_{III}) durch den Ausgangsdruck des Verdichters (V) bestimmt ist,
dass das niedrigste Druckniveau (p₀) durch die Sättigungstemperatur im Verdampfer (VER) bestimmt ist, und
dass zwei dazwischenliegende Zusatzdruckniveaus (p_{I}, p_{II}) sich durch die Betriebsdrücke nach der Strahlpumpe (EJ) und nach dem Drosselventil (DV) ergeben.

4. Verfahren nach einem der Ansprüche 1 bis 3, wobei als Arbeitsmedium Kohlenstoffdioxid-CO₂ (R 744) verwendet wird.

## Claims

1. A method for operating a heat pump,
in which a compressor (V), a condenser (KON), a throttle valve (DV), an evaporator (VER), a jet pump (EJ) and a separator (SEP) are arranged in a heat-pump circuit of a working medium,
wherein gaseous working medium is compressed in the compressor (V) of the heat-pump circuit,
wherein the compressor outlet is connected to the inlet of the condenser (KON), in which the working medium condenses with a release of heat, wherein the heat is supplied as useful heat directly or indirectly to a vehicle interior,
wherein the condenser (KON) is followed by the jet pump (EJ), to which the liquid working medium coming from the condenser (KON) is supplied as driving medium, on the one hand, and to which the gaseous working medium flowing out from the evaporator (VER) is supplied as suction medium, on the other hand, in such a way that the driving medium and the suction medium are compressed in the jet pump (EJ) to form a two-phase mixture, in particular the driving medium and the suction medium are compressed in a diffusor (7) of the jet pump (EJ) to form a two-phase mixture,
wherein the jet-pump outlet is connected to the inlet of the separator (SEP), to which the two-phase mixture is supplied and in which the gaseous working medium is separated from the liquid working medium, wherein the gas outlet of the separator (SEP) is connected to the compressor inlet and the liquid outlet of the separator (SEP) is connected to the inlet of the throttle valve (DV), and
wherein the liquid working medium is throttled in the throttle valve (DV) and the outlet of the throttle valve is connected to the inlet of the evaporator (VER), in which there occurs, with a supply of heat, a phase transition to gaseous working medium which is supplied as suction medium to the suction-medium inlet (6) of the jet pump (EJ) .

2. The method according to Claim 1, wherein the heat-pump circuit furthermore has an intermediate heat exchanger (ZK) through which, preferably in a counterflow configuration, the working medium is conducted from the condenser (KON) to the jet pump (EJ), on the one hand, and the working medium is conducted from the separator (SEP) to the compressor (V), on the other hand.

3. The method according to Claim 1 or Claim 2, wherein four pressure levels are specified for the heat-pump circuit in such a way
that the highest pressure level (p_{III}) is determined by the outlet pressure of the compressor (V),
that the lowest pressure level (p₀) is determined by the saturation temperature in the evaporator (VER), and
that two intermediate additional pressure levels (p_{I}, p_{II}) arise as a result of the operating pressures downstream of the jet pump (EJ) and downstream of the throttle valve (DV).

4. The method according to one of Claims 1 to 3, wherein carbon dioxide CO₂ (R 744) is used as working medium.

## Revendications

1. Procédé d'exploitation d'une pompe à chaleur,
selon lequel un compresseur (V), un condenseur (KON), une soupape d'étranglement (DV), un évaporateur (VER), une pompe à jet (EJ) et un séparateur (SEP) sont agencés dans un circuit de pompe à chaleur d'un fluide de travail,
le fluide de travail gazeux étant comprimé dans le compresseur (V) du circuit de pompe à chaleur,
la sortie de compresseur étant reliée à l'entrée du condenseur (KON), dans lequel le fluide de travail se condense avec dégagement de chaleur, la chaleur étant amenée directement ou indirectement à un espace intérieur de véhicule en tant que chaleur utile,
la pompe à jet (EJ) étant agencée en aval du condenseur (KON), à laquelle est amené, d'une part, le fluide de travail liquide provenant du condenseur (KON) en tant que fluide de propulsion et à laquelle est amené, d'autre part, le fluide de travail gazeux s'écoulant de l'évaporateur (VER) en tant que fluide d'aspiration, de telle sorte que le fluide de propulsion et le fluide d'aspiration sont comprimés dans la pompe à jet (EJ) en un mélange à deux phases, notamment, le fluide de propulsion et le fluide d'aspiration sont comprimés en un mélange à deux phases dans un diffuseur (7) de la pompe à jet (EJ),
la sortie de pompe à jet étant reliée à l'entrée du séparateur (SEP), auquel le mélange à deux phases est amené et dans lequel le fluide de travail gazeux est séparé du fluide de travail liquide,
la sortie de gaz du séparateur (SEP) étant reliée à l'entrée de compresseur et la sortie de liquide du séparateur (SEP) étant reliée à l'entrée de la soupape d'étranglement (DV), et
le fluide de travail liquide étant étranglé dans la soupape d'étranglement (DV) et la sortie de la soupape d'étranglement étant reliée à l'entrée de l'évaporateur (VER), dans lequel s'effectue la transformation de phase en fluide de travail gazeux avec apport de chaleur, lequel est amené en tant que fluide d'aspiration à l'entrée de fluide d'aspiration (6) de la pompe à jet (EJ) .

2. Procédé selon la revendication 1, le circuit de pompe à chaleur présentant en outre un échangeur de chaleur intermédiaire (ZK) à travers lequel passe, de préférence à contre-courant, d'une part le fluide de travail du condenseur (KON) vers la pompe à jet (EJ) et d'autre part le fluide de travail du séparateur (SEP) vers le compresseur (V).

3. Procédé selon la revendication 1 ou la revendication 2, quatre niveaux de pression étant définis pour le circuit de pompe à chaleur, de telle sorte que
le niveau de pression le plus élevé (p_{III}) est déterminé par la pression de sortie du compresseur (V),
le niveau de pression le plus bas (p₀) est déterminé par la température de saturation dans l'évaporateur (VER), et
deux niveaux de pression supplémentaires intermédiaires (p_{I}, p_{II}) résultent des pressions d'exploitation après la pompe à jet (EJ) et après la soupape d'étranglement (DV).

4. Procédé selon l'une quelconque des revendications 1 à 3, du dioxyde de carbone CO₂ (R 744) étant utilisé en tant que fluide de travail.
